(19) Europäisches Patentamt
European Patent Office
Office européen des brevets

(11) **EP 4 759 439 A1**

(12) **EUROPEAN PATENT APPLICATION**

(43) Date of publication:
**17.06.2026 Bulletin 2026/25**

(21) Application number: **25222131.2**

(22) Date of filing: **10.12.2025**

(51) International Patent Classification (IPC):
**B05D 3/00** (2006.01)    **F26B 3/30** (2006.01)
**F26B 13/00** (2006.01)    **F26B 25/22** (2006.01)
**H01M 4/00** (2006.01)

(52) Cooperative Patent Classification (CPC):
**F26B 3/30; F26B 13/00; F26B 13/007; F26B 25/22; H01M 4/00**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **11.12.2024 KR 20240184036**

(71) Applicant: **SAMSUNG SDI CO., LTD.**
**Yongin-si, Gyeonggi-do 17084 (KR)**

(72) Inventors:
• **KIM, Gisung**
  **17084 Yongin-si, Gyeonggi-do (KR)**
• **PARK, Jaeseong**
  **17084 Yongin-si, Gyeonggi-do (KR)**

• **LEE, Gahyeon**
  **17084 Yongin-si, Gyeonggi-do (KR)**
• **SEO, Wonsub**
  **17084 Yongin-si, Gyeonggi-do (KR)**
• **PYO, Young-Hak**
  **17084 Yongin-si, Gyeonggi-do (KR)**
• **KIM, Sohun**
  **17084 Yongin-si, Gyeonggi-do (KR)**
• **KIM, Donghun**
  **17084 Yongin-si, Gyeonggi-do (KR)**
• **OH, Geunyeong**
  **17084 Yongin-si, Gyeonggi-do (KR)**

(74) Representative: **Gulde & Partner**
**Patent- und Rechtsanwaltskanzlei mbB**
**Berliner Freiheit 2**
**10785 Berlin (DE)**

(54) **SYSTEM AND METHOD FOR CONTROLLING DRYING VARIATION BY USING NEAR-INFRARED LAMPS**

(57)    A system for controlling a drying variation by using near-infrared, NIR, lamps in a drying process of an electrode plate includes: first and second density measurement parts configured to measure first and second density data that is density of an electrode plate before and after drying, respectively; a drying quantity calculation part configured to calculate drying quantity data by processing the first density data and the second density data; and a lamp controller configured to control output energy of each of the NIR lamps based on an instruction signal received from the drying quantity calculation part. The drying quantity calculation part is configured to calculate a drying variation by comparing the first density data and the second density data and maintains a uniform drying state of the electrode plate by correcting the drying variation in real time.

FIG. 3

100

150

110    120    130    140

Slot Die

EP 4 759 439 A1

**Description**

**BACKGROUND**

**1. Field**

Aspects of embodiments of the present disclosure relate to a system and method for controlling a drying variation by using a near-infrared lamp.

**2. Description of the Related Art**

Different from primary batteries that are not designed to be charged, secondary batteries are designed to be discharged and recharged. Low-capacity secondary batteries are used in small, portable electronic devices, such as smart phones, feature phones, notebook computers, digital cameras, and camcorders, while large-capacity secondary batteries are widely used as power sources for driving motors, such as of hybrid vehicles or electric vehicles, and for power storage. A secondary battery generally includes an electrode assembly including (or consisting of) a positive electrode and a negative electrode, a case that accommodates the electrode assembly, a terminal part connected to the electrode assembly, etc.

A conventional drying system is unable to ensure uniform drying of an electrode plate due to, for example, thermal variation, insufficient output adjustment in response to changes in the moving speed (e.g., the proceeding speed), inadequate real-time feedback control, and degraded energy efficiency.

The above information disclosed in this Background section is for enhancement of understanding of the background of the present disclosure, and therefore, it may contain information that does not constitute related (or prior) art.

**SUMMARY**

Various aspects are related to a drying process of an electrode plate, wherein a slurry including an electrode material is used to form the solid electrode plate by removing liquid from the slurry in the drying process.

Aspects of the present disclosure are directed to a system and method for controlling a drying variation of an electrode plate by using near-infrared lamps and by controlling the amount of light energy transferred to the electrode plate by individually controlling the near-infrared (NIR) lamps and adjusting the number of on/off cycles of the lamps based on density data before and after drying.

However, aspects and features of the present disclosure are not limited to those mentioned above, and other aspects and features not mentioned herein will be clearly understood by those skilled in the art from the description of the present disclosure below.

A system for controlling a drying variation by using near-infrared (NIR) lamps in a drying process of an electrode plate, according to various aspects of the present disclosure, includes: a first density measurement part configured to measure first density data that is a density of an electrode plate before drying; a second density measurement part configured to measure second density data that is a density of the electrode plate after drying; a drying quantity calculation part configured to calculate drying quantity data by processing the first density data and the second density data obtained from the first density measurement part and the second density measurement part; and a lamp controller configured to control output energy of each of the NIR lamps based on an instruction signal received from the drying quantity calculation part. The drying quantity calculation part is configured to calculate a drying variation by comparing the first density data and the second density data and maintains a uniform drying state of the electrode plate by correcting the drying variation in real time.

The drying quantity calculation part may be configured to calculate the drying quantity data by averaging the first density data and the second density data that are obtained from the first density measurement part and the second density measurement part.

The drying quantity calculation part may be configured to compare a reference first drying quantity data and a reference second drying quantity data and adjusts the output energy of the NIR lamps based on the result of the comparison.

The lamp controller may be configured to adjust (e.g., to increase or decrease, e.g., to decrease) the output energy when a difference between the first density data and the second density data is greater than a threshold value based on the result of the comparison of the drying quantity calculation part.

The lamp controller may be configured to adjust (e.g., to increase or decrease, e.g., to increase) the output energy when a difference between the first density data and the second density data is equal to or less than a threshold value based on the results of the comparison of the drying quantity calculation part.

The first density measurement part may be configured to measure the first density data in real time, the second density measurement part may be configured to measure the second density data in real time, and the drying quantity calculation part may be configured to adjust real-time feedback data based on the drying quantity data.

The lamp controller may be configured to independently control the NIR lamps based on the real-time feedback data.

The lamp controller may be configured to synchronize a proceeding speed and the output energy so that all of parts of the electrode plate are identically dried.

The drying quantity calculation part may be configured to adjust output intensity of the NIR lamps to reduce the drying variation.

The system may be configured to analyze the drying variation occurring in a width direction of the electrode plate in real time and to maintain drying uniformity of the electrode plate by independently adjusting the output energy of the NIR lamps based on the result of the analysis.

A method of controlling a drying variation of an electrode plate by using near-infrared (NIR) lamps, according to various aspects of the present disclosure, includes: a first density measurement step of measuring, by a first density measurement part, first density data that is a density of an electrode plate before drying; a second density measurement step of measuring, by a second density measurement part, second density data that is a density of the electrode plate after drying; a drying quantity calculation step of calculating, by a drying quantity calculation part, drying quantity data by analyzing the first density data and the second density data; and a lamp control step of controlling, by a lamp controller, output energy of each of the NIR lamps based on an instruction signal received from the drying quantity calculation part. The drying quantity calculation step includes calculating a drying variation by comparing the first density data and the second density data and maintaining a uniform drying state of the electrode plate by correcting the drying variation in real time.

The drying quantity calculation step may include calculating the drying quantity data by averaging the first density data and the second density data that are obtained from the first density measurement part and the second density measurement part.

The drying quantity calculation step may include comparing reference first drying quantity data and reference second drying quantity data and adjusting the output energy of the NIR lamp based on the result of the comparison.

The drying quantity calculation step may include adjusting (e.g., increasing or decreasing, e.g., may include decreasing), by the lamp controller, the output energy when a difference between the first density data and the second density data is greater than a threshold value.

The drying quantity calculation step may include adjusting (e.g., decreasing or increasing, e.g., may include increasing), by the lamp controller, the output energy when a difference between the first density data and the second density data is equal to or less than a threshold value.

The first density measurement step may include measuring the first density data in real time, the second density measurement step may include measuring the second density data in real time, and the drying quantity calculation step may include controlling real-time feedback data based on the drying quantity data.

The lamp control step may include independently controlling the NIR lamps based on the real-time feedback data.

The lamp control step may include synchronizing a proceeding speed and the output energy such that all of parts of the electrode plate are identically dried.

The drying quantity calculation step may include adjusting output intensity of the NIR lamps to reduce the drying variation.

The method may further include analyzing a drying variation occurring in a width direction of the electrode plate in real time and maintaining drying uniformity of the electrode plate by independently adjusting the output energy of the NIR lamps based on the result of the analysis.

Various aspects of the present disclosure enable the uniform drying of an electrode plate by reducing or minimizing a drying variation through feedback control based on real-time density data in the drying system that uses NIR lamps. Accordingly, excessive or insufficient drying of an electrode plate is avoided and uniform heat treatment across the entire electrode plate is ensured. Furthermore, an optimal drying state for an electrode plate can be maintained despite a change in the proceeding speed because lamp output energy can be adjusted to synchronize the lamp output energy based the proceeding speed. Thus, the quality of a secondary battery can be improved, and an electrode plate having uniform performance can be produced.

Furthermore, aspects of the present disclosure enable the efficient use of energy. Excessive energy consumption is prevented by monitoring a drying variation in real time and accurately adjusting to output an optimal heat quantity. This avoids unnecessary energy waste in a production process and improves energy efficiency of the entire process. Embodiments of the present disclosure simultaneously provide high-quality uniform drying performance and energy reduction.

However, various aspects and features of the present disclosure are not limited to those described above, and other aspects and features not mentioned will be clearly understood by a person skilled in the art from the detailed description, described below.

**BRIEF DESCRIPTION OF THE DRAWINGS**

The following drawings attached to this specification illustrate embodiments of the present disclosure and serve to further describe aspects, features, and the technical spirit of the present disclosure along with the aforementioned contents of the disclosure. Accordingly, the present disclosure should not be construed as being limited to only contents described in such drawings, in which:

FIG. 1A is an upper perspective view of a cylindrical secondary battery.
FIG. 1B is a cross-sectional view of the cylindrical secondary battery shown in FIG. 1A.
FIG. 2A is an upper perspective view of a prismatic secondary battery.
FIG. 2B is a cross-sectional view taken along the line I-I' in FIG. 2A.
FIG. 3 is a schematic diagram illustrating a system for controlling a drying variation by using near-infrared (NIR) lamps according to various aspects of the present disclosure.
FIG. 4 is a diagram illustrating an electrode plate being dried by using lamps in a plurality of columns according to various aspects of the present disclosure.
FIG. 5 is a diagram illustrating NIR lamps having different states depending on calculated drying quantities according to various aspects of the present disclosure.
FIG. 6 is a diagram illustrating a system for controlling a drying variation by using NIR lamps according to various aspects of the present disclosure.
FIG. 7 is a diagram illustrating a system for controlling a drying variation by using NIR lamps according to various aspects of the present disclosure.
FIG. 8 is a table illustrating an adjustment standard for the number of NIR halogen lamps to be controlled.
FIG. 9 is a flowchart describing a method of controlling a drying variation by using NIR lamps according to various aspects of the present disclosure.

**DETAILED DESCRIPTION**

Embodiments of the present disclosure will be described below, in detail, with reference to the accompanying drawings. Prior to the description, it is noted that the terms or words used in this specification and claims should not be construed as being limited to their common or dictionary meanings but instead should be understood to have meanings and concepts in agreement with the spirit of the present disclosure based on the principle that an inventor can define the concept of each term suitably in order to describe his/her own invention in the best way possible. Accordingly, because the embodiments described in this specification and the configurations illustrated in the drawings are only examples of the present disclosure and do not cover all the technical ideas of the present disclosure, it should be understood that various changes and modifications may be made at the time of filing this application.

It will be further understood that the terms "comprises/includes" and/or "comprising/including" when used herein, specify the presence of stated features, integers, steps, operations, elements, components, and/or groups thereof, but do not preclude the presence or addition of one or more other features, integers, steps, operations, elements, components, and/or groups thereof.

To facilitate understanding of the present disclosure, the accompanying drawings may not be drawn to scale and the dimensions of some components may be exaggerated. It should be noted that the same reference numerals are designated to the same components in different embodiments.

Reference to two compared elements, features, etc. as being "the same" means that they are "substantially the same". Therefore, the phrase "substantially the same" may include a deviation that is considered low in the art, for example, a deviation of about 5% or less. The uniformity of any parameter in a given region may mean that it is uniform from an average perspective.

Although the terms such as "first" and/or "second" are used to describe various components, these components are not limited by these terms, of course. These terms are only used to distinguish one component from another component. Thus, unless specifically stated to the contrary, a first component may be termed a second component without departing from the teachings of exemplary embodiments.

Throughout the specification, unless otherwise stated, each element may be singular or plural.

Arrangement of any component "above (or below)" or "on (or under)" a component may mean that any component is disposed in contact with the upper (or lower) surface of the component, as well as that other components may be interposed between the element and any element disposed on (or under) the element.

It will be understood that, when a component is referred to as being "connected", "coupled", or "joined" to another component, not only can it be directly "connected", "coupled", or "joined" to the other element, but also can it be indirectly "connected", "coupled", or "joined" to the other element with other elements interposed therebetween.

As used herein, the term "and/or" includes any and all combinations of one or more of the associate listed items. The use of "may" when describing embodiments of the present disclosure relates to "one or more embodiments of the present disclosure". Expressions such as "at least one" and "one or more" preceding a list of elements modify the entire list of elements and do not modify the individual elements in the list.

Throughout the specification, when "A and/or B" is stated, it means A, B, or A and B, unless otherwise stated. In addition, when "C to D" is stated, it means C or more and D or less, unless specifically stated to the contrary.

When the phrase such as "at least one of A, B, and C", "at least one of A, B, or C", "at least one selected from the group of A, B, and C", or "at least one selected from among A, B, and C" is used to designate a list of elements A, B, and C, the phrase may refer to any and all suitable combinations.

The term "use" may be considered synonymous with the term "utilize". As used herein, the terms "substantially," "about," and similar terms are used as terms of approximation rather than as terms of degree, and are intended to account for inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Accordingly, a first element, component, region, layer, or section discussed below may be termed a second element, component, region, layer, or section without departing from the teachings of exemplary embodiments.

For ease of explanation in describing the relationship of one element or feature to another element(s) or feature(s) as illustrated in the drawings, spatially relative terms such as "beneath", "below", "lower", "above", and "upper" may be used herein. It will be understood that spatially relative positions are intended to encompass different directions of the device in use or operation in addition to the direction depicted in the drawings. For example, if the device in the drawings is turned over, any element described as being "below" or "beneath" another element would then be oriented "above" or "over" another element. Therefore, the term "below" may encompass both upward and downward directions.

The terminology used herein is for the purpose of describing embodiments of the present disclosure and is not intended to limit the present disclosure.

The type of secondary battery includes a coin type, a cylindrical type, a prismatic type, and a pouch type. Prior to a description of embodiments of the present disclosure, first, cylindrical and prismatic secondary batteries are generally described because the present disclosure may be applied to the cylindrical and prismatic secondary batteries. However, the present disclosure is not limited to cylindrical and prismatic batteries.

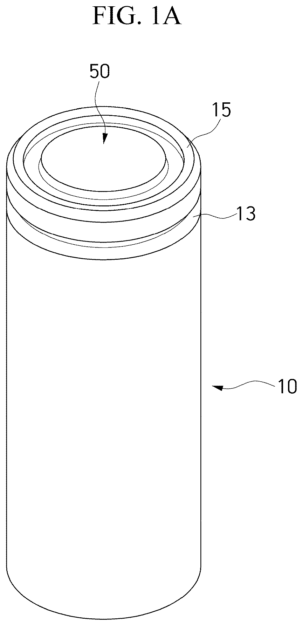

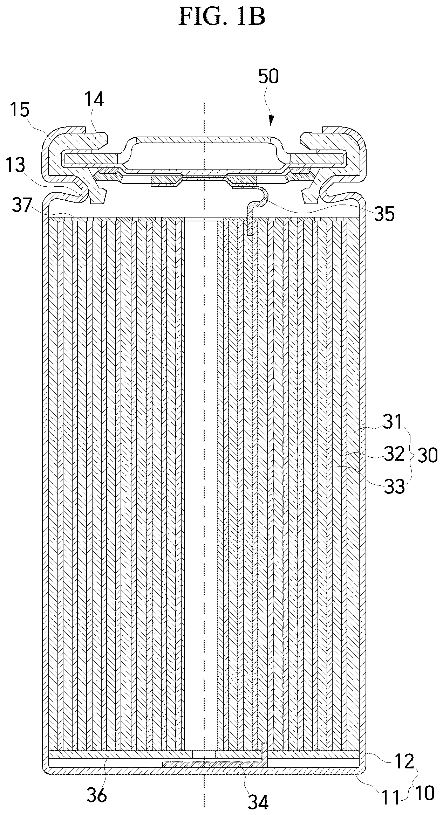

FIG. 1A is an upper perspective view of a cylindrical secondary battery. FIG. 1B is a cross-sectional view of the cylindrical secondary battery shown in FIG. 1A.

Referring to FIG. 1A and FIG. 1B, the cylindrical secondary battery may include an electrode assembly 30, a case 10 that accommodates the electrode assembly 30 and an electrolyte therein, a cap assembly 50 that is connected to an opening in the case 10 and that seals the case 10, and an insulating plate 37 disposed between the electrode assembly 30 and the cap assembly 50 within the case 10.

The electrode assembly 30 may include a separator 32 and a first electrode 33 and the second electrode 31 with the separator 32 interposed between and may be wound in a jelly-roll form.

The first electrode 33 may include a first base (e.g., a first substrate) and a first active material layer disposed on the first base. A first lead tap 35 may extend from a first uncoated part of the first base to the outside (e.g., to the outside of the electrode assembly 30) and may be at where the first active material layer is not disposed. The first lead tap 35 may be electrically connected to the cap assembly 50.

The second electrode 31 may include a second base (e.g., a second substrate) and a second active material layer disposed on the second base. A second lead tap 34 may extend from a second uncoated part of the second base to the outside (e.g., to the outside of the electrode assembly 30) and may be at where the second active material layer is not disposed . The second lead tap 34 may be electrically connected to the case 10. The first lead tap 35 and the second lead tap 34 may extend in opposite directions.

The first electrode 33 may act as a positive electrode. In such an embodiment, the first base may include (or may be composed of) aluminum foil, for example. The first active material layer may include a transition metal oxide, for example. The second electrode 31 may act as a negative electrode. In such an embodiment, the second base may include (or may be composed of) copper foil or nickel foil, for example. The second active material layer may include graphite, for example.

The separator 32 permits movement of lithium ions between the first electrode 33 and the second electrode 31 while preventing a short-circuit therebetween. The separator 32 may include (or may be composed of) a polyethylene film, a polypropylene film, or a polyethylene-polypropylene film, for example. The case 10 may accommodate the electrode assembly 30 and an electrolyte and forms an external form (or external shape) of the battery along with the cap assembly 50.

The case 10 may have a body part 12 having an approximate cylindrical shape and a bottom part 11 connected to one side of the body part 12. A beading part 13, which is a deformed portion of the body part 12 that is deformed inwardly toward the inside of the body part 12, may be disposed in the body part 12. A crimping part 15 that has been bent inwardly toward the inside of the body part 12 may be disposed at an end of the body part 12 at the open side (or open end).

The beading part 13 may restrict movement of the electrode assembly 30 within the case 10 and may facilitate the settlement of a gasket 14 and the cap assembly 50. The crimping part 15 may firmly fix the cap assembly 50 by pressurizing an edge of the cap assembly 50 through the gasket 14. The case 10 may be made of iron plated with nickel, for example.

The cap assembly 50 may seal the case 10 by being fixed inside of the crimping part 15 through the gasket 14. The cap assembly 50 may include a cap-up part, a safety vent, a cap-down part, an insulating member, and a sub-plate, but the present disclosure is not limited to such examples. The cap assembly 50 may be variously deformed.

The cap-up part may be disposed at the top of the cap assembly 50. The cap-up part may include a terminal part that upward convexly protrudes and is to be connected to an external circuit. An output (or opening) for discharging excess gas may be disposed in the cap-up part around the terminal part.

The safety vent may be disposed under the cap-up part. The safety vent may include a protruding part that downward convexly protrudes and is connected to the sub-plate. The safety vent may have at least one notch disposed around the protruding part.

When excess gas is generated due to over-charging or an abnormal operation of the secondary battery, the protruding part may be upward deformed by the pressure of the gas and separate from the sub-plate. Furthermore, the safety vent may be cut (e.g., may burst or tear) along the notch. The cut safety vent prevents the explosion of the secondary battery by discharging the excess gas to the outside.

The cap-down part may be disposed under the safety vent. The cap-down part may have a first opening exposing the protruding part of the safety vent and a second opening for discharging gas. The insulating member may be disposed between the safety vent and the cap-down part and may insulate the safety vent and the cap-down part.

The sub-plate may be disposed under the cap-down part. The sub-plate may be fixed to the bottom of the cap-down part to close (e.g., to cover or seal) the first opening in the cap-down part. The protruding part of the safety vent may be fixed to the sub-plate. The first lead tap 35 that extends from the electrode assembly 30 may be fixed to the sub-plate. Accordingly, the cap-up part, the safety vent, the cap-down part, and the sub-plate may be electrically connected to the first electrode 33 of the electrode assembly 30.

The insulating plate 37 may be disposed on the electrode assembly 30 under the beading part 13. The insulating plate 37 may have a tap opening through which the first lead tap 35 extends. The cap assembly 50 that has been electrically connected to the first electrode 33 by the first lead tap 35 may face the electrode assembly 30 with the insulating plate 37 interposed therebetween. The cap assembly 50 may maintain the state in which the cap assembly 50 has been insulated from the electrode assembly 30 by the insulating plate 37. The cylindrical secondary battery may include another insulating plate 36 for insulation between the electrode assembly 30 and the bottom part 11 of the case 10.

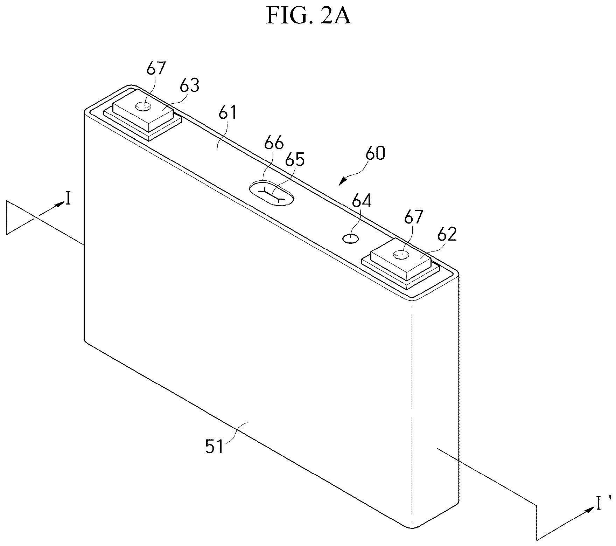

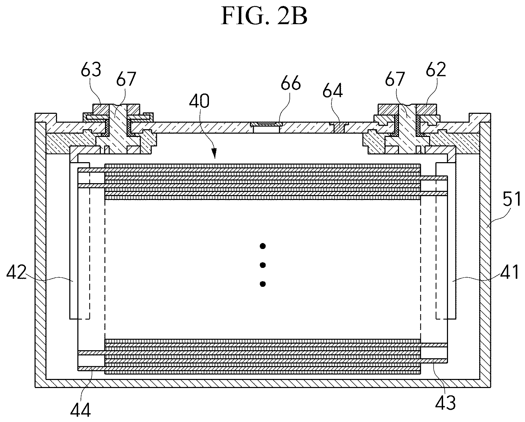

FIG. 2A is a top perspective view of a prismatic secondary battery. FIG. 2B is a cross-sectional view taken along the line I-I' in FIG. 2A.

First, the external appearance of the prismatic secondary battery illustrated in FIG. 2A will be described.

A case 51 defines an overall appearance of the prismatic secondary battery and may be made of a conductive metal, such as aluminum, aluminum alloy, or nickel-plated steel. In addition, the case 51 may provide a space for accommodating an electrode assembly therein.

A cap assembly 60 may include a cap plate 61 that covers the opening in the case 51. In some embodiments, the case 51 and the cap plate 61 may be made of a conductive material. A first terminal 62 and a second terminal 63 may be electrically connected to respective positive and negative (or negative and positive) electrodes inside the case 51 and may be installed to protrude outwardly through the cap plate 61.

The cap plate 61 may have an electrolyte injection port 64 formed to have a sealing plug (or seal pin) installed therein and a vent 66 having a notch 65. The vent 66 is for discharging excess gas generated inside the secondary battery.

With reference to FIG. 2B, the internal structure of the prismatic secondary battery and the coupling structure with the cap assembly 60 will be further described.

As shown in FIG. 2B, a prismatic secondary battery may include an electrode assembly 40, a first current collector 41, the first terminal 62, a second current collector 42, the second terminal 63, the case 51, and the cap assembly 60.

The electrode assembly 40 may be formed by winding or stacking a stack of a first electrode plate, a separator, and a second electrode plate, which are each formed as thin plates or films. When the electrode assembly 40 is a wound stack, a winding axis may be parallel to the longitudinal direction (e.g., the y direction) of the case 51. In some other embodiments, the electrode assembly 40 is a stack type rather than a winding type, but the shape of the electrode assembly 40 is not limited in the present disclosure. In addition, the electrode assembly 40 may be a Z-stack electrode assembly in which a positive electrode plate and a negative electrode plate are inserted into both sides of a separator, which is then bent into a Z-stack. In addition, one or more electrode assemblies may be stacked such that long sides of the electrode assemblies are adjacent to each other and accommodated in the case, and the number of electrode assemblies in the case is not limited in the present disclosure. The first electrode plate of the electrode assembly may act as a negative electrode, and the second electrode plate may act as a positive electrode. Of course, the reverse is also possible.

The first electrode plate may be formed by applying a first electrode active material, such as graphite, carbon, or the like, to a first electrode current collector formed of a metal foil, such as copper, a copper alloy, nickel, a nickel alloy, or the like. The first electrode plate may include a first electrode tab 43 (e.g., a first uncoated portion) that is a region to which the first electrode active material is not applied. The first electrode tab 43 may act as a current flow path between the first electrode plate and the first current collector 41. In some embodiments, when the first electrode plate is manufactured, the first electrode tab 43 is formed by being cut in advance to protrude to one side of the electrode assembly 40, or the first electrode tab 43 protrudes to one side of the electrode assembly 40 more than (e.g., farther than or beyond) the separator without being separately cut.

The second electrode plate may be formed by applying a second electrode active material, such as a transition metal oxide, on a second electrode current collector formed of a metal foil, such as aluminum or an aluminum alloy. The second electrode plate may include a second electrode tab 44 (e.g., a second uncoated portion) that is a region to which the second electrode active material is not applied. The second electrode tab 44 may act as a current flow path between the second electrode plate and the second current collector 42. In some embodiments, the second electrode tab 44 may be formed by being cut in advance to protrude to the other side (e.g., the opposite side) of the electrode assembly when the second electrode plate is manufactured, or the second electrode plate may protrude to the other side of the electrode assembly more than (e.g., farther than or beyond) the separator without being separately cut.

In some embodiments, the first electrode tab 43 is located on (e.g., protrudes from) the left side of the electrode assembly 40, and the second electrode tab 44 may be located on (e.g., protrudes from) the right side of the electrode assembly 40. In some other embodiments, the first electrode tab 43 and the second electrode tab 44 are located on (e.g., protrude from) one side of the electrode assembly 40 in the same direction. Here, for convenience of description, the left and right sides are defined according to the secondary battery as oriented in FIG. 2B, and the positions thereof may change when the secondary battery is rotated left and right or up and down.

The separator prevents or substantially reduces instances of a short circuit between the first electrode plate and the second electrode plate while allowing movement of lithium ions therebetween. The separator may be made of, for example, a polyethylene film, a polypropylene film, a polyethylene-polypropylene film, or the like.

The first electrode tab 43 of the first electrode plate and the second electrode tab 44 of the second electrode plate may be positioned at both ends (e.g., opposite ends) of the electrode assembly 40. In some embodiments, the electrode assembly 40 is accommodated in the case 51 along with an electrolyte.

In addition, in the electrode assembly 40, the first current collector 41 and the second current collector 42 may be welded and connected to the first electrode tab 43 of the first electrode plate and the second electrode tab 44 of the second electrode plate exposed on both sides, respectively, to then be positioned thereat, respectively.

The first current collection part 41 and the second current collection part 42 may be connected to the first terminal 62 and the second terminal 63 described with reference to FIG. 2A, through terminal pins 67, respectively. In some embodiments, outer circumference surfaces of the terminal pins 67 may be screw processed (e.g., threaded) and may be fastened to the first terminal 62 and the second terminal 63, respectively, through screw coupling. However, the present disclosure is not limited to such an example, and the terminal pins 67 may be connected to the first terminal 62 and the second terminal 63 by, for example, riveting or welding.

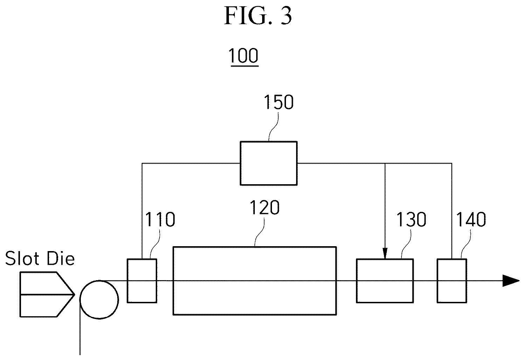

FIG. 3 is a schematic diagram illustrating a system 100 for controlling a drying variation by using near-infrared (NIR) lamps according to various aspects of the present disclosure.

Referring to FIG. 3, the system 100 for controlling a drying variation by using NIR lamps may include a first density measurement part 110, a drying furnace 120, a lamp controller 130, a second density measurement part 140, and a drying quantity calculation part 150.

The first density measurement part 110 may measure (or may determine or generate) first density data, that is, density of an electrode plate before drying. The second density measurement part 140 may measure (or may determine or generate) second density data, that is, density of the electrode plate after drying. The first density data and the second density data may be measured in real time.

Furthermore, the drying furnace 120 that dries the electrode plate as it passes through the drying furnace 120 may be disposed between the first density measurement part 110 and the second density measurement part 140. The drying quantity calculation part 150 may calculate drying quantity data by processing the first density data and the second density data obtained from the first density measurement part and the second density measurement part. Furthermore, the lamp controller 130 may control output energy of an NIR lamp based on an instruction signal received from the drying quantity calculation part 150. In one embodiment, the control of the output energy of the NIR lamp may include a lamp being turned on from among a plurality of lamps included in the lamp controller 130 and/or the intensity of the lamp being adjusted.

The drying quantity calculation part 150 may calculate a drying variation by comparing the first density data measured by the first density measurement part 110 and the second density data measured by the second density measurement part 120 and may maintain (e.g., may ensure) the uniform drying state of the electrode plate by correcting the drying variation, e.g., in real time.

Furthermore, the drying quantity calculation part 150 may calculate drying quantity data by averaging the first density data and the second density data obtained from the first density measurement part 110 and the second density measurement part 120. The drying quantity calculation part 150 may compare reference (or preset) first drying quantity data and reference (or preset) second drying quantity data and may adjust output energy of the NIR lamp based on the results of the comparison.

Furthermore, the drying quantity calculation part 150 may measure a loading level (hereinafter referred to as "L/L") of the electrode plate in real time based on the first density data and the second density data and may calculate a drying correction quantity based on a difference between a target density data (e.g., a target wet density value and a target density value) before and after drying. This may be expressed as the following equation (1):

$$\text{Density system after drying - density system before drying = drying correction quantity } (B'/B)/100 - (A'/A)/100 = C \tag{1}$$

       A: a wet density measurement value before drying
       A': a target wet density value
       B: a density measurement value after drying
       B': a target density value
       C: a drying correction quantity

When a difference between the first density data and the second density data is greater than a reference (or preset) threshold value, the lamp controller 130 may adjust (e.g., increase or decrease, e.g., may decrease) output energy of an NIR lamp. The reference threshold value may be a basic value of 0, that is, there is no difference between the first density data and the second density data but may be set as an approximate value of 0 according to various circumstances or conditions.

Furthermore, when the difference between the first density data and the second density data is equal to or less than the reference threshold value, the lamp controller 130 may adjust (e.g., decrease or increase, e.g., may increase) the output energy of the NIR lamp.

The drying quantity calculation part 150 may adjust real-time feedback data based on the drying quantity data. The lamp controller 130 may independently control the NIR lamps based on the real-time feedback data.

In some embodiments, the system 100 for controlling a drying variation by using NIR lamps may include a plurality of drying furnaces. The first density measurement part 110, the drying furnace 120, the lamp controller 130, and the second density measurement part 140 may be included in each of the plurality of drying furnaces. Each of the plurality of drying furnaces may measure densities before and after drying in each column. The drying quantity calculation part 150 may adjust real-time feedback data based on the drying quantity data. The lamp controller 130 may independently control the NIR lamps based on the real-time feedback data.

Furthermore, the lamp controller 130 may control the lamps such that all of the parts of the electrode plate are identically or substantially identically dried by synchronizing a proceeding speed (e.g., a moving speed) and the output intensity of the NIR lamp(s). The drying quantity calculation part 150 may adjust the output intensity of each of the NIR lamps to reduce or minimize drying variation.

The system 100 for controlling a drying variation by using NIR lamps may analyze a drying variation that occurs in (or along) the width direction of an electrode plate in real time and may maintain the drying uniformity of the electrode plate by independently adjusting output energy of the NIR lamps based on the results of the analysis. In some aspects, a first one and a second one of the NIR lamps may be operated independently from one another with respectively adjusted output energies.

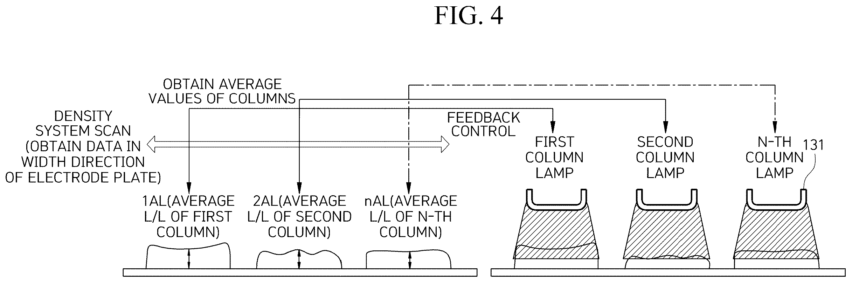

FIG. 4 is a diagram illustrating an electrode plate being dried by using lamps in a plurality of columns according to various aspects of the present disclosure.

Referring to FIG. 4, assuming that n columns are coated (e.g., n columns are coated on an electrode plate or substrate) as shown in, for example, the left side of FIG. 4, lamps may be constructed or arranged identically with (or corresponding to) the number of n columns as in, for example, the right side of FIG. 4. A section may be averaged and processed so that the quantity of L/L data in the width direction of the electrode plate is the same as the number of columns. An operation may be performed so that the number of lamps in the width direction and the quantity of L/L data obtained in the width direction of the electrode plate are matched in a 1-to-1 manner.

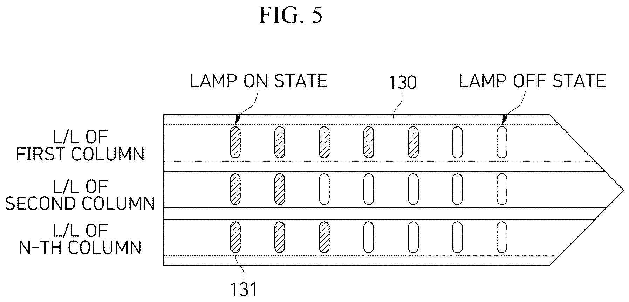

This is described with reference to FIG. 5. FIG. 5 is a diagram illustrating NIR lamps having different states depending on calculated drying quantities according to various aspects of the present disclosure.

Referring to FIG. 5, each column may include a plurality of lamps 131. The amount of energy transferred to (e.g., irradiated to) an electrode plate may be adjusted by controlling the number of ON states of the lamps (e.g., by controlling the number of lamps in the ON state) based on a distribution between the columns.

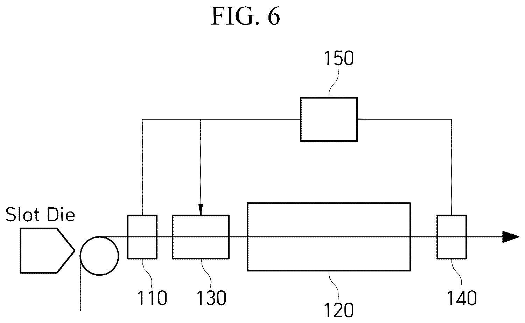

FIG. 6 is a schematic diagram of a system for controlling a drying variation by using NIR lamps according to various aspects of the present disclosure.

When an auxiliary drying system is not installed after (or behind) the drying furnace 120, that is, the lamp controller 130 cannot be installed after (or behind) the drying furnace 120, as illustrated in FIG. 6, the auxiliary drying system may be installed before (or ahead of) the drying furnace and may adjust drying quantity for each column through the drying quantity calculation part 150.

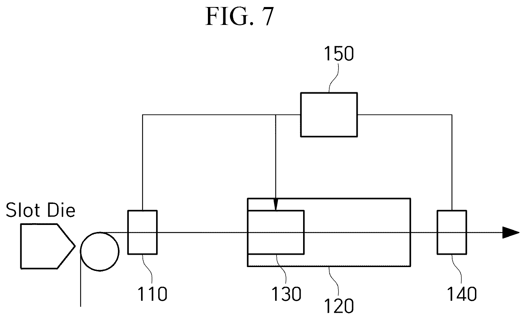

FIG. 7 is a diagram illustrating a system for controlling a drying variation by using NIR lamps according to various aspects of the present disclosure.

Referring to FIG. 7, when the lamp controller 130 is not installed outside the drying furnace 120, the lamp controller 130 may be installed within the drying furnace 120 and may control a drying quantity for each column.

Furthermore, the system for controlling a drying variation by using NIR lamps has been described based on a density measurement method of measuring L/L data of an electrode plate as a way to measure the quality (e.g., the drying quality) of the electrode plate. In other embodiments, a drying quantity may be calculated by using a thickness measurement method of measuring an actual thickness of an electrode plate before and after a drying furnace. The method of calculating a drying quantity based on the thickness of an electrode plate may be the same as the calculating method using the density measurement method.

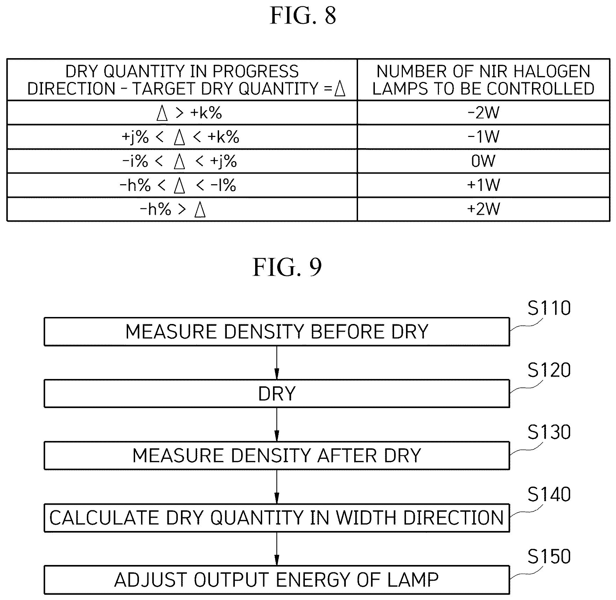

FIG. 8 is a table illustrating an adjustment standard for the number of NIR halogen lamps to be controlled.

To describe FIG. 8, first, a cooperation algorithm with a calculated actual drying quantity is described below. It is assumed that individual NIR lamps have been applied for each column and the number of lamps for each column is 10. When the lamps can be individually controlled, data corresponding to the number of coating columns may be obtained by using L/L data in the width direction of an electrode plate so that a distribution of drying quantities at a corresponding location can be obtained through a drying operation. In such an embodiment, the number of lamps to be controlled can be automatically adjusted based on the table shown in FIG. 8 for each coating column. When such a process is repeated, a distribution of drying quantities in the width direction of the electrode plate between the columns can be obtained within a desired section. The adjustment standard for the number of NIR halogen lamps to be controlled as shown in FIG. 8 is based on the principle in which moisture in an electrode plate is evaporated by using light energy and L/L data is decreased or increased based on the amount of moisture evaporated as a way to control (or set) the amount of light energy radiated to a corresponding column by changing the number of lamps in an ON state for each column. In FIG. 8, the table is divided into five sections, but the number of sections may be changed, as necessary. An optimal correspondence value according to slurry may be found via experiments because the number of sections may be different depending on the capacity of a corresponding lamp and the slurry that is coated.

FIG. 9 is a flowchart describing a method of controlling a drying variation by using NIR lamps according to various aspects of the present disclosure.

Referring to FIG. 9, the method of controlling a drying variation by using NIR lamps may include a first density measurement step S110, a drying step S120, a second density measurement step S130, a drying quantity calculation step S140, and a lamp control step S150.

In the first density measurement step S110, the first density measurement part may measure density before an electrode plate is dried. In the second density measurement step S130, the second density measurement part may measure density of the electrode plate after drying.

Thereafter, the drying quantity calculation step S140 may be a step of calculating, by the drying quantity calculation part, a drying quantity by analyzing the first density data and the second density data. The lamp control step S150 may be a step of controlling, by the lamp controller, output energy of NIR lamps based on an instruction signal received from the drying quantity calculation part.

Hereinafter, materials which may be used in a secondary battery according to an embodiment of the present disclosure are described.

A compound (e.g., a lithiated intercalation compound) capable of reversible intercalation and deintercalation of lithium may be used as a positive electrode active material. For example, one type or more selected from among complex oxides of metal, selected from among cobalt, manganese, nickel, and a combination of them, and lithium may be used as the positive electrode active material.

The complex oxide may be lithium transition metal complex oxide. A detailed example of the complex oxide may include lithium nickel-based oxide, lithium cobalt-based oxide, lithium manganese-based oxide, a lithium ferrous phosphate-based compound, cobalt-free nickel-manganese-based oxide, or a combination of them.

For example, a compound that is represented as one of the following chemical formulas may be used. $Li_aA_{1-b}X_bO_{2-c}D_c$ ($0.90 \leq a \leq 1.8$, $0 \leq b \leq 0.5$, $0 \leq c \leq 0.05$); $Li_aMn_{2-b}X_bO_{4-c}D_c$ ($0.90 \leq a \leq 1.8$, $0 \leq b \leq 0.5$, $0 \leq c \leq 0.05$); $Li_aNi_{1-b-c}Co_bX_cO_{2-\alpha}D_\alpha$

$(0.90 \leq a \leq 1.8, 0 \leq b \leq 0.5, 0 \leq c \leq 0.5, 0 < \alpha < 2)$; $Li_aNi_{1-b-c}Mn_bX_cO_{2-\alpha}D_\alpha$ $(0.90 \leq a \leq 1.8, 0 \leq b \leq 0.5, 0 \leq c \leq 0.5, 0 < \alpha < 2)$; $Li_aNi_bCo_cL^1_{d-}G_eO_2$ $(0.90 \leq a \leq 1.8, 0 \leq b \leq 0.9, 0 \leq c \leq 0.5, 0 \leq d \leq 0.5, 0 \leq e \leq 0.1)$; $Li_aNiG_bO_2$ $(0.90 \leq a \leq 1.8, 0.001 \leq b \leq 0.1)$; $Li_aCoG_bO_2$ $(0.90 \leq a \leq 1.8, 0.001 \leq b \leq 0.1)$; $Li_aMn_{1-b}G_bO_2$ $(0.90 \leq a \leq 1.8, 0.001 \leq b \leq 0.1)$; $Li_aMn_2G_bO_4$ $(0.90 \leq a \leq 1.8, 0.001 \leq b \leq 0.1)$; $Li_aMn_{1-g}G_gPO_4$ $(0.90 \leq a \leq 1.8, 0 \leq g \leq 0.5)$; $Li_{(3-f)}Fe_2(PO_4)_3$ $(0 \leq f \leq 2)$; and $Li_aFePO_4$ $(0.90 \leq a \leq 1.8)$.

In the chemical formula, A may be Ni, Co, Mn, or a combination of them. X may be Al, Ni, Co, Mn, Cr, Fe, Mg, Sr, V, a rare earth element, or a combination of them; D may be O, F, S, P, or a combination of them. G may be Al, Cr, Mn, Fe, Mg, La, Ce, Sr, V, or a combination of them. $L^1$ may be Mn, Al, or a combination of them.

A positive electrode for a lithium secondary battery may include a current collector and a positive electrode active material layer formed on the current collector. The positive electrode active material layer may include the positive electrode active material and may further include a binder and/or a conductive material.

Content of the positive electrode active material may be in a range of about 90 wt.% to about 99.5 wt.% with respect to the positive electrode active material layer 100 wt.%. Content of the binder and the conductive material may be in a range of about 0.5 wt.% to about 5 wt.% with respect to the positive electrode active material layer 100 wt.%.

Al may be used as the current collector, but the present disclosure is not limited thereto.

A negative electrode active material may include a material capable of reversibly Intercalation/de-intercalation with respect to lithium ions, lithium metal, an alloy of lithium metal, a material capable of doping and dedoping with respect to lithium, or transition metal oxide.

The material capable of reversibly Intercalation/de-intercalation with respect to lithium ions may include a carbon-based negative electrode active material, for example, crystalline carbon, amorphous carbon, or a combination of them. An example of the crystalline carbon may include graphite, such as natural graphite or synthetic graphite. Examples of the amorphous carbon may include soft or hard carbon, mesophase pitch carbide, and fired coke.

An Si-based negative electrode active material or an Sn-based negative electrode active material may be used as the material capable of doping and dedoping with respect to lithium. The Si-based negative electrode active material may be silicon, a silicon-carbon composite, $SiO_x$ $(0 < x < 2)$, a Si-based alloy, or a combination of them.

The silicon-carbon composite may be a composite of silicon and amorphous carbon. According to an implementation example, the silicon-carbon composite may include silicon particles and may have a form in which amorphous carbon has been coated on surfaces of silicon particles.

The silicon-carbon composite may further include crystalline carbon. For example, the silicon-carbon composite may include a core including crystalline carbon and silicon particles, and an amorphous carbon coating layer disposed on a surface of the core.

A negative electrode for a lithium secondary battery may include a current collector and a negative electrode active material layer disposed on the current collector. The negative electrode active material layer may include the negative electrode active material and may further include a binder and/or a conductive material.

For example, the negative electrode active material layer may include the negative electrode active material in a range of about 90 wt.% to about 99 wt.%, the binder in a range of about 0.5 wt.% to about 5 wt.%, and the conductive material in a range of 0 wt.% to about 5 wt.%.

A nonaqueous-based binder, an aqueous-based binder, a dry binder, or a combination of them may be used as the binder. If the aqueous-based binder is used as a binder for the negative electrode, the binder for the negative electrode may further include a cellulose-series compound capable of assigning viscosity.

One selected from among nickel foil, stainless steel foil, titanium foil, nickel foam, copper foam, a polymer base on which a conductive metal has been coated, and a combination of them may be used as a current collector for the negative electrode.

An electrolyte for a lithium secondary battery may include a nonaqueous organic solvent and lithium salts.

The nonaqueous organic solvent may act as a medium through which ions that are involved in an electrochemical reaction of a battery can move.

The nonaqueous organic solvent may be a carbonate-based, ester-based, ether-based, ketone-based, or alcohol-based solvent, an aprotic solvent, or a combination of them. The carbonate-based, ester-based, ether-based, ketone-based, or alcohol-based solvent, or the aprotic solvent may be used solely, or two types or more of them may be mixed and used as the nonaqueous organic solvent.

Furthermore, if the carbonate-based solvent is used, annular carbonate and chain carbonate may be mixed and used.

A separator may be present between the positive electrode and the negative electrode depending on the type of lithium secondary battery. Polyethylene, polypropylene, and polyvinylidene fluoride, or a multi-layer having two or more layers of them may be used as the separator.

The separator may include a porous base, and a coating layer including an organic matter, an inorganic matter, or a combination of them that is disposed on one or both sides of the porous base.

The organic matter may include a polyvinylidene fluoride-based polymer or (meth)acrylic-based polymer.

The inorganic matter may include inorganic particles selected among $Al_2O_3$, $SiO_2$, $TiO_2$, $SnO_2$, $CeO_2$, $MgO$, $NiO$,

$CaO$, $GaO$, $ZnO$, $ZrO_2$, $Y_2O_3$, $SrTiO_3$, $BaTiO_3$, $Mg(OH)_2$, boehmite, and a combination of them, but the present disclosure is not limited thereto.

The organic matter and the inorganic matter may have a form in which the organic matter and the inorganic matter have been mixed in one coating layer or a form in which a coating layer including the organic matter and a coating layer including the inorganic matter have been stacked.

Various examples that show aspects of the present disclosure related to the system and the method for controlling a drying variation by using near-infrared lamps in a drying process of an electrode plate are described in more detail below.

Example 1 is a system for controlling a drying variation by using near-infrared (NIR) lamps in a drying process of an electrode plate, the system including: one or more density measurement parts configured to obtain first density data representing a first density of the electrode plate at a first processing stage (e.g., before drying) and second density data representing a second density of the electrode plate at a second processing state (e.g., after drying); one or more processors (e.g., a drying quantity calculation part) configured to calculate drying quantity data based on (e.g., by processing, e.g., by analyzing) the first density data and the second density data obtained from the one or more density measurement parts; and a lamp controller configured to control output energy of each of the NIR lamps based on one or more instruction signals received from the drying quantity calculation part. The drying quantity calculation part may be configured to calculate a drying variation by comparing the first density data and the second density data with one another. The drying quantity calculation part may be configured to maintain a uniform drying state of the electrode plate by correcting the drying variation, e.g., in real time. The drying quantity calculation part may be configured to adapt one or more operation states (e.g., a respective output energy) of each of the NIR lamps to maintain a uniform drying state of the electrode plate by correcting the drying variation, e.g., during processing (e.g., during drying) the electrode plate. In some aspects, other measurements (e.g., thickness measurements, conductance measurements, optical measurements, for example) may be used in addition to the one or more density measurements or alternatively to the one or more density measurements. Another Example 1 includes a system for controlling a drying variation by using near-infrared (NIR) lamps in a drying process of an electrode plate, the system including: one or more density measurement parts configured to obtain density data representing a density of the electrode plate at at least one processing stage (e.g., before or after drying); one or more processors (e.g., a drying quantity calculation part) configured to calculate drying quantity data based on (e.g., by processing, e.g., by analyzing) the density data obtained from the one or more density measurement parts; and a lamp controller configured to control output energy of each of the NIR lamps based on one or more instruction signals received from the drying quantity calculation part. In some aspects, the one or more instruction signals represent an operation state and/or a change of an operation state of each of the NIR lamps as a function of the calculate drying quantity data to cause a uniform drying state of the electrode plate by correcting the drying variation.

In Example 2, the system of Example 1 may optionally further include that the drying quantity calculation part is configured to calculate the drying quantity data by averaging the first density data and the second density data that are obtained from the one or more density measurement parts.

In Example 3, the system of Example 1 or 2 may optionally further include that the drying quantity calculation part is configured to compare a reference drying quantity (e.g., represented by reference drying quantity data) and a drying quantity (e.g., represented by the drying quantity data) with one another and to adjust the output energy of the NIR lamps based on a result of the comparison.

In Example 4, the system of any one of Examples 1 to 3 may optionally further include that the lamp controller is configured to adjust the output energy when a difference between the first and second density of the electrode plate is greater than a threshold value.

In Example 5, the system of any one of Examples 1 to 4 may optionally further include that the lamp controller is configured to adjust the output energy when a (e.g., the) difference between the first and second density of the electrode plate is equal to or less than a (e.g., the) threshold value.

In Example 6, the system of any one of Examples 1 to 5 may optionally further include that: the one or more density measurement parts are configured to measure the first and/or second density data in real time.

In Example 7, the system of any one of Examples 1 to 6 may optionally further include that the drying quantity calculation part is configured to adjust real-time feedback data based on the drying quantity data.

In Example 8, the system of Example 7 may optionally further include that the lamp controller is configured to control the NIR lamps independently from one another based on the real-time feedback data.

In Example 9, the system of any one of Examples 1 to 8 may optionally further include that the lamp controller is configured to synchronize a proceeding speed and the output energy with one another, e.g., so that all of parts of the electrode plate are identically dried and/or so that a drying variation is minimal.

In Example 10, the system of any one of Examples 1 to 9 may optionally further include that the drying quantity calculation part is configured to adjust an output intensity of one or more or each of the NIR lamps, e.g., to reduce the drying variation.

In Example 11, the system of any one of Examples 1 to 10 may optionally further include that the system is configured to analyze the drying variation occurring in a width direction of the electrode plate (e.g., in real time).

In Example 12, the system of any one of Examples 1 to 11 may optionally further include that the system is configured to maintain drying uniformity of the electrode plate by independently adjusting the output energy of the NIR lamps, e.g., based on the result of an analysis of a drying variation occurring in a width direction of the electrode plate (e.g., in real time).

Example 13 is a method of controlling a drying variation of an electrode plate by using near-infrared (NIR) lamps, the method including: a first density measurement step of measuring (e.g., by one or more density measurement parts, e.g., by a first density measurement part) first density data representing a first density of the electrode plate at a first processing stage (e.g., before drying); a second density measurement step of measuring (e.g., by one or more density measurement parts, e.g., by a second density measurement part) second density data that is a density of the electrode plate at a second processing stage after the first processing stage (e.g., after drying); a drying quantity calculation step of calculating (e.g., by a drying quantity calculation part) drying quantity data based on (e.g., by analyzing) the first density data and the second density data; and a lamp control step of controlling (e.g., by a lamp controller) output energy of each of the NIR lamps based on one or more instruction signals (e.g., received from the drying quantity calculation part). The drying quantity calculation step may include calculating a drying variation by comparing the first density data and the second density data with one another. The drying quantity calculation step may include maintaining a uniform drying state of the electrode plate by correcting the drying variation, e.g., in real time.

In Example 14, the method of Example 13 may optionally further include that the drying quantity calculation step includes calculating the drying quantity data by averaging the first density data and the second density data that are obtained in the first density measurement step and in the second density measurement step.

In Example 15, the method of Example 13 or 14 may optionally further include that the drying quantity calculation step includes comparing reference first drying quantity data and reference second drying quantity data with one another and adjusting the output energy of the NIR lamp based on the result of the comparison.

In Example 16, the method of any one of Examples 13 to 15 may optionally further include that the drying quantity calculation step includes comparing a reference drying quantity (e.g., represented by reference drying quantity data) and a drying quantity (e.g., represented by the drying quantity data) with one another and to adjust the output energy of the NIR lamps based on a result of the comparison.

In Example 17, the method of any one of Examples 13 to 16 may optionally further include that the drying quantity calculation step includes adjusting (e.g., by the lamp controller) the output energy when a difference between the first density and the second density is greater than a threshold value.

In Example 18, the method of any one of Examples 13 to 17 may optionally further include that the drying quantity calculation step includes adjusting (e.g., by the lamp controller) the output energy when a (the) difference between the first density and the second density is equal to or less than a (the) threshold value.

In Example 19, the method of any one of Examples 13 to 18 may optionally further include that the first density measurement step includes measuring the first density data in real time, that the second density measurement step includes measuring the second density data in real time, and that the drying quantity calculation step includes controlling real-time feedback data based on the drying quantity data.

In Example 20, the method of Example 19 may optionally further include that the lamp control step includes independently controlling the NIR lamps based on the real-time feedback data.

In Example 21, the method of any one of Examples 13 to 20 may optionally further include that the lamp control step includes synchronizing a proceeding speed (e.g., a speed at which the electrode plate is moved relative to a drying furnace) and the output energy with one another (e.g., such that all of parts of the electrode plate are identically dried).

In Example 22, the method of any one of Examples 13 to 21 may optionally further include that the drying quantity calculation step includes adjusting output intensity of the NIR lamps to reduce the drying variation.

In Example 23, the method of any one of Examples 13 to 22 may optionally further include analyzing a drying variation occurring in a width direction of the electrode plate (e.g., in real time) and maintaining drying uniformity of the electrode plate by independently adjusting the output energy of the NIR lamps based on the result of the analysis (e.g., in real time).

Although the present disclosure has been described above in connection with example embodiments and drawings, the present disclosure is not limited to the embodiments. A person having ordinary knowledge in the art to which the present disclosure pertains may modify and change the present disclosure within the technical spirit of the present disclosure and the equivalent range of the following claims.

**Description of Some Reference Symbols**

100: system for controlling drying variation by using NIR lamp

110: first density measurement part
120: drying furnace
130: lamp
140: second density measurement part
150: lamp controller

**Claims**

1. A system for controlling a drying variation by using near-infrared, NIR, lamps (131) in a drying process of an electrode plate, the system comprising:

   a first density measurement part (110) configured to measure first density data that is a density of an electrode plate before drying;
   a second density measurement part (140) configured to measure second density data that is a density of the electrode plate after drying;
   a drying quantity calculation part (150) configured to calculate drying quantity data by processing the first density data and the second density data obtained from the first density measurement part (110) and the second density measurement part (140); and
   a lamp controller (130) configured to control output energy of each of the NIR lamps (131) based on an instruction signal received from the drying quantity calculation part (150),
   wherein the drying quantity calculation part (150) is configured to calculate a drying variation by comparing the first density data and the second density data and to maintain a uniform drying state of the electrode plate by correcting the drying variation in real time.

2. The system as claimed in claim 1, wherein the drying quantity calculation part (150) is configured to calculate the drying quantity data by averaging the first density data and the second density data that are obtained from the first density measurement part (110) and the second density measurement part (140).

3. The system as claimed in claim 1 or 2, wherein the drying quantity calculation part (150) is configured to compare reference first drying quantity data and reference second drying quantity data and to adjust the output energy of the NIR lamps (131) based on the result of the comparison; or
   wherein the drying quantity calculation part (150) is configured to compare the drying quantity data and reference drying quantity data with one another and to adjust the output energy of the NIR lamps (131) based on a result of the comparison.

4. The system as claimed in any one of claims 1 to 3, wherein the lamp controller (130) is configured to decrease the output energy when a difference between a first density represented by the first density data and a second density represented by the second density data is greater than a threshold value based on the result of the comparison of the drying quantity calculation part (150); and/or
   wherein the lamp controller (130) is configured to increase the output energy when a difference between a first density represented by the first density data and a second density represented by the second density data is equal to or less than a threshold value based on the result of the comparison of the drying quantity calculation part (150).

5. The system as claimed in any one of claims 1 to 4, wherein:

   the first density measurement part (110) is configured to measure the first density data in real time,
   the second density measurement part (140) is configured to measure the second density data in real time, and
   the drying quantity calculation part (150) is configured to adjust real-time feedback data based on the drying quantity data.

6. The system as claimed in claim 5, wherein the lamp controller (130) is configured to independently control the NIR lamps (131) based on the real-time feedback data.

7. The system as claimed in any one of claims 1 to 6, wherein the lamp controller (130) is configured to synchronize a proceeding speed and the output energy so that all of parts of the electrode plate are identically dried; and/or
   wherein the drying quantity calculation part (150) is configured to adjust output intensity of the NIR lamps (131) to reduce the drying variation.

8. The system as claimed in any one of claims 1 to 7, wherein the system is configured to analyze the drying variation occurring in a width direction of the electrode plate in real time and to maintain drying uniformity of the electrode plate by independently adjusting the output energy of the NIR lamps (131) based on a result of the analysis.

9. A method of controlling a drying variation of an electrode plate by using near-infrared, NIR, lamps (131), the method comprising:

a first density measurement step of measuring, by a first density measurement part (110), first density data that is a density of an electrode plate before drying;
a second density measurement step of measuring, by a second density measurement part (140), second density data that is a density of the electrode plate after drying;
a drying quantity calculation step of calculating, by a drying quantity calculation part (150), drying quantity data by analyzing the first density data and the second density data; and
a lamp (131) control step of controlling, by a lamp controller (130), output energy of each of the NIR lamps (131) based on an instruction signal received from the drying quantity calculation part (150),
wherein the drying quantity calculation step comprises calculating a drying variation by comparing the first density data and the second density data and maintaining a uniform drying state of the electrode plate by correcting the drying variation in real time.

10. The method as claimed in claim 9, wherein the drying quantity calculation step comprises calculating the drying quantity data by averaging the first density data and the second density data that are obtained from the first density measurement part (110) and the second density measurement part (140); or

wherein the drying quantity calculation step comprises comparing reference first drying quantity data and reference second drying quantity data and adjusting the output energy of the NIR lamp (131) based on the result of the comparison; or
wherein the drying quantity calculation step comprises comparing the drying quantity data and reference drying quantity data and adjusting the output energy of the NIR lamp (131) based on the result of the comparison.

11. The method as claimed in claim 9 or 10, wherein the drying quantity calculation step comprises decreasing, by the lamp controller (130), the output energy when a difference between a first density represented by the first density data and a second density represented by the second density data is greater than a threshold value; and/or
wherein the drying quantity calculation step comprises increasing, by the lamp controller (130), the output energy when a difference between a first density represented by the first density data and a second density represented by the second density data is equal to or less than a threshold value.

12. The method as claimed in any one of claims 9 to 11, wherein:

the first density measurement step comprises measuring the first density data in real time,
the second density measurement step comprises measuring the second density data in real time, and
the drying quantity calculation step comprises controlling real-time feedback data based on the drying quantity data.

13. The method as claimed in claim 12, wherein the lamp (131) control step comprises independently controlling the NIR lamps (131) based on the real-time feedback data; and/or
wherein the lamp (131) control step comprises synchronizing a proceeding speed and the output energy such that all of parts of the electrode plate are identically dried.

14. The method as claimed in any one of claims 9 to 13, wherein the drying quantity calculation step comprises adjusting output intensity of the NIR lamps (131) to reduce the drying variation.

15. The method as claimed in any one of claims 9 to 14, further comprising analyzing a drying variation occurring in a width direction of the electrode plate in real time and maintaining drying uniformity of the electrode plate by independently adjusting the output energy of the NIR lamps (131) based on a result of the analysis.

FIG. 1A

# FIG. 1B

# FIG. 2A

## FIG. 2B

# FIG. 3

## FIG. 4

DENSITY SYSTEM SCAN
(OBTAIN DATA IN WIDTH DIRECTION OF ELECTRODE PLATE)

OBTAIN AVERAGE VALUES OF COLUMNS

1AL(AVERAGE L/L OF FIRST COLUMN)

2AL(AVERAGE L/L OF SECOND COLUMN)

nAL(AVERAGE L/L OF N-TH COLUMN)

FEEDBACK CONTROL

FIRST COLUMN LAMP

SECOND COLUMN LAMP

N-TH COLUMN LAMP 131

FIG. 5

LAMP ON STATE       130       LAMP OFF STATE

L/L OF
FIRST COLUMN

L/L OF
SECOND COLUMN

L/L OF
N-TH COLUMN

131

FIG. 6

FIG. 7

## FIG. 8

| DRY QUANTITY IN PROGRESS DIRECTION – TARGET DRY QUANTITY =△ | NUMBER OF NIR HALOGEN LAMPS TO BE CONTROLLED |
|---|---|
| △ > +k% | −2W |
| +j% < △ < +k% | −1W |
| −i% < △ < +j% | 0W |
| −h% < △ < −l% | +1W |
| −h% > △ | +2W |

## FIG. 9

MEASURE DENSITY BEFORE DRY — S110

DRY — S120

MEASURE DENSITY AFTER DRY — S130

CALCULATE DRY QUANTITY IN WIDTH DIRECTION — S140

ADJUST OUTPUT ENERGY OF LAMP — S150

Europäisches
Patentamt

European
Patent Office

Office européen
des brevets

# EUROPEAN SEARCH REPORT

**Application Number**

EP 25 22 2131

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CN 115 842 085 A (NINGDE CONTEMPORARY AMPEREX TECH CO LTD) 24 March 2023 (2023-03-24) * paragraphs [0118] - [0157]; figure 6 * | 1-15 | INV. B05D3/00 F26B3/30 F26B13/00 F26B25/22 H01M4/00 |
| A | KR 2024 0082661 A (LG ENERGY SOLUTION LTD [KR]) 11 June 2024 (2024-06-11) * paragraphs [0087] - [0098]; figure 4 * | 1-15 | |
| A | CN 118 719 492 A (NEW VISION TECH PTE LTD) 1 October 2024 (2024-10-01) * paragraphs [0062] - [0092]; figure 1 * | 1-15 | |
| A | US 2014/014037 A1 (WATANABE ATSUSHI [JP] ET AL) 16 January 2014 (2014-01-16) * paragraphs [0012] - [0013], [0033] - [0036]; figures 4,6 * | 1-15 | |
| A | EP 4 369 428 A1 (FUJIFILM CORP [JP]) 15 May 2024 (2024-05-15) * paragraphs [0127] - [0128], [0172] - [0176]; figures 1,2 * | 1-15 | TECHNICAL FIELDS SEARCHED (IPC) |
| A | CN 115 463 764 A (SUNWODA ELECTRIC VEHICLE CELL CO LTD) 13 December 2022 (2022-12-13) * paragraphs [0071] - [0075]; figure 1 * | 1-15 | B05D A21C H01M F26B |
| A | US 2023/311155 A1 (LIN YINXIANG [CN] ET AL) 5 October 2023 (2023-10-05) * paragraphs [0061] - [0064]; figure 2 * | 1-15 | |
| A | EP 3 496 187 A1 (LG CHEMICAL LTD [KR]) 12 June 2019 (2019-06-12) * paragraph [0039] - paragraph [0042]; figure 3 * | 1-15 | |
| A | US 2013/244104 A1 (INOUE TETSUTARO [JP]) 19 September 2013 (2013-09-19) * paragraphs [0068] - [0071]; figure 1A * | 1-15 | |

The present search report has been drawn up for all claims

| Place of search | Date of completion of the search | Examiner |
|---|---|---|
| The Hague | 31 March 2026 | Mendão, João |

EPO FORM 1503 03.82 (P04C01)

## ANNEX TO THE EUROPEAN SEARCH REPORT
## ON EUROPEAN PATENT APPLICATION NO.

EP 25 22 2131

This annex lists the patent family members relating to the patent documents cited in the above-mentioned European search report.
The members are as contained in the European Patent Office EDP file on
The European Patent Office is in no way liable for these particulars which are merely given for the purpose of information.

31-03-2026

| Patent document cited in search report | | Publication date | Patent family member(s) | | Publication date |
|---|---|---|---|---|---|
| CN 115842085 | A | 24-03-2023 | CN | 115842085 A | 24-03-2023 |
| | | | EP | 4507016 A1 | 12-02-2025 |
| | | | KR | 20240170964 A | 05-12-2024 |
| | | | US | 2025070111 A1 | 27-02-2025 |
| | | | WO | 2024037191 A1 | 22-02-2024 |
| KR 20240082661 | A | 11-06-2024 | CN | 118922954 A | 08-11-2024 |
| | | | EP | 4468381 A1 | 27-11-2024 |
| | | | JP | 7794533 B2 | 06-01-2026 |
| | | | JP | 2025507688 A | 21-03-2025 |
| | | | KR | 20240082661 A | 11-06-2024 |
| | | | US | 2025198700 A1 | 19-06-2025 |
| | | | WO | 2024117764 A1 | 06-06-2024 |
| CN 118719492 | A | 01-10-2024 | NONE | | |
| US 2014014037 | A1 | 16-01-2014 | JP | 5897808 B2 | 30-03-2016 |
| | | | JP | 2012209074 A | 25-10-2012 |
| | | | TW | 201239342 A | 01-10-2012 |
| | | | US | 2014014037 A1 | 16-01-2014 |
| | | | WO | 2012132864 A1 | 04-10-2012 |
| EP 4369428 | A1 | 15-05-2024 | CN | 117798034 A | 02-04-2024 |
| | | | EP | 4369428 A1 | 15-05-2024 |
| | | | JP | 2024052408 A | 11-04-2024 |
| | | | KR | 20240045997 A | 08-04-2024 |
| CN 115463764 | A | 13-12-2022 | NONE | | |
| US 2023311155 | A1 | 05-10-2023 | CN | 215465733 U | 11-01-2022 |
| | | | EP | 4238658 A1 | 06-09-2023 |
| | | | US | 2023311155 A1 | 05-10-2023 |
| | | | WO | 2023005449 A1 | 02-02-2023 |
| EP 3496187 | A1 | 12-06-2019 | CN | 109792034 A | 21-05-2019 |
| | | | EP | 3496187 A1 | 12-06-2019 |
| | | | KR | 20190019828 A | 27-02-2019 |
| | | | PL | 3496187 T3 | 05-07-2021 |
| | | | US | 2019229324 A1 | 25-07-2019 |
| US 2013244104 | A1 | 19-09-2013 | CN | 103311496 A | 18-09-2013 |
| | | | JP | 5554824 B2 | 23-07-2014 |
| | | | JP | 2013219012 A | 24-10-2013 |
| | | | KR | 20130105432 A | 25-09-2013 |
| | | | US | 2013244104 A1 | 19-09-2013 |

EPO FORM P0459

For more details about this annex : see Official Journal of the European Patent Office, No. 12/82